# EUROPÄISCHE PATENTSCHRIFT

(11) **EP 2 491 294 B1**
(45) Veröffentlichungstag und Bekanntmachung des Hinweises auf die Patenterteilung: **24.07.2013**
(21) Anmeldenummer: 10752322.7
(22) Anmeldetag: 08.09.2010
(51) Int. Cl.: F17C 13/06

(54) **BEHÄLTERHALSAUFBAU EINES DRUCKBEHÄLTERS**
VESSEL NECK CONSTRUCTION OF A PRESSURE VESSEL
CONSTITUTION DE COL DE RÉCIPIENT D'UN RÉCIPIENT SOUS PRESSION

(30) Priorität: 19.10.2009 DE 102009049948
(43) Veröffentlichungstag der Anmeldung: 29.08.2012
(73) Patentinhaber: Kautex Maschinenbau GmbH, 53229 Bonn (DE)
(72) Erfinder: HOLBACH, Markus, 53332 Bornheim (DE); WALBROEL, Stefan, 53757 Sankt Augustin (DE)
(74) Vertreter: polypatent
(86) Internationale Anmeldenummer: PCT/EP2010/005516
(87) Internationale Veröffentlichungsnummer: WO 2011/047752

(56) Entgegenhaltungen:
- EP-A2- 0 203 631
- EP-A2- 2 000 734
- DE-A1- 10 306 681
- DE-B3-102006 057 422
- DE-C1- 19 631 546
- US-B1- 6 230 922

## Beschreibung

Die Erfindung betrifft einen Druckbehälter zur Speicherung von flüssigen oder gasförmigen Medien umfassend einen Kunststoffinnenbehälter mit wenigstens einem nicht einstückig mit diesem verbundenen Halsstück, welches an dem Behälterhals im Bereich einer Behälteröffnung angeordnet ist, sowie mit einer den Kunststoffinnenbehälter und das Halsstück zumindest teilweise umschließenden Stützhülle, wobei das Halsstück mit Mitteln zur Aufnahme einer Anschlussarmatur versehen ist.

Ein solcher Druckbehälter ist beispielsweise aus der DE 2 152 123 bekannt. Der dort beschriebene Druckgasbehälter besteht aus einem formstabilen, rotationssymmetrischen, gasdichten, in seinem mittleren Bereich zylindrischen Innenbehälter mit zwei von außen auf die Böden des Innenbehälters coaxial aufgesetzten Polstücken bzw. Halsstücken und einem auf den Innenbehälter unter Erfassung der Polstücke gewickelten, aus Endlosfäden und ausgehärtetem Kunststoff laminierten Außenmantel, der eine Stützhülle für den Innenbehälter bildet. Die Polstücke bzw. Halsstücke dienen zum dichten Anschluss einer Armatur, beispielsweise eines Ventils.

Derartige Druckgasbehälter können beispielsweise für Gasdrücke zwischen 30 bar und 700 bar ausgelegt sein, wobei bekanntlich Kunststoffinnenbehälter an und für sich nicht die erforderliche Druckstabilität besitzen, da viele Kunststoffe unter hohem Druck anfangen zu fließen. Es ist deshalb bekannt, Druckgasbehälter der eingangs genannten Art mit einer Stützhülle zu versehen. Die Stützhülle besteht üblicherweise aus kunstharzgetränkten Fäden, die um den Innenbehälter aus Kunststoff gewickelt sind. Der Kunststoffinnenbehälter wird landläufig auch als Liner bezeichnet. Die Polstücke werden in der Literatur sowohl als Halsstücke als auch als sogenannte Bossteile oder auch als Anschlussstücke bezeichnet. Diese bestehen in der Regel aus Metall und sind mit einem Innengewinde zur Aufnahme einer Armatur in Form eines Ventils oder dergleichen versehen. Dies ist bei Druckbehältern sowohl aus Stabilitätsgründen als auch aus Dichtigkeitsgründen in der Regel erforderlich.

Ein Druckbehälter der eingangs genannten Art ist beispielsweise auch aus der EP 0 753 700 B1 bekannt. Dieser Druckbehälter umfasst zwei im Halsbereich liegende Öffnungen, in denen je ein die Öffnung verschließendes und abdichtendes Halsstück angeordnet ist, wobei die Halsstücke in dem dem Druckbehälter zugewandten Endbereich mit einem kegelstumpfartigen Kragen versehen sind, der innenseitig vom Liner und außenseitig von der Stützhülle umgeben ist.

Bei fast allen bekannten Druckbehältern der eingangs genannten Art spielt die Abdichtung des Innenbehälters bzw. des Kunststoffinnenbehälters gegen das Halsstück bzw. im Bereich des Halsstücks eine entscheidende Rolle, damit die Behälter die Zulassungsanforderungen hinsichtlich Leckage, beispielsweise bei einem Prüfdruck von 450 bar erfüllen.

Bei dem Druckbehälter gemäß DE 2 152 123 ist vorgesehen, dass die Wandung des Innenbehälters stetig in einen angeformten, axial nach außen gerichteten und etwa hohlzylindrischen Behälterhals übergeht und das aufgesetzte Polstück/Halsstück mit seiner Innenkontur der Außenkontur des Innenbehälters im Übergangsbereich zwischen Behälterboden, Öffnung und Behälterhals anliegend so ausgebildet ist, dass ein flanschförmiger, andem Boden anliegender Teil in einen ausgeformten etwa hohlzylindrischen Polstückhals übergeht, dessen den Behälterhals umgebende Innenwand sich auswärts gerichtet konisch erweitert, an welcher die Behälterwand unter radial nach außen gerichteter Verformung durch ein coaxial mit dem Polstückhals verschraubtes entsprechend konisch geformtes Anschlussstück dicht und kraftschlüssig angepresst ist. Durch diese Anordnung kann davon ausgegangen werden, dass der Behälterhals zwischen dem Polstückhals und dem Anschlussstück unter Zwischenlage eines Dichtmittels so eingespannt ist, dass die Verbindung hinreichend abgedichtet ist. Diese Anordnung erfordert ein mehrteiliges Polstück/Halsstück und ist in der Montage verhältnismäßig aufwendig.

Bei dem Druckbehälter gemäß EP 753 700 B1 ist vorgesehen, den Halsbereich des Liners einerseits mit einem Dichtring gegen einen Absatz des Halsstücks abzudichten und andererseits mittels einer Dichtscheibe zwischen der Stirnfläche des Halsabschnitts des Liners und der damit zusammenwirkenden Anschlagfläche des Halsstücks abzudichten.

Diese Art der Abdichtung ist insbesondere in dem Bereich kritisch, wo die Stirnfläche des Kunststoffinnenbehälterhalses unter Zwischenlage des Dichtrings gegen das Halsstück anliegt.

Insbesondere dann, wenn der Innenbehälter bzw. der Kunststoffinnenbehälter durch Extrusionsblasformen hergestellt wird, kann eine solche Abdichtung problematisch sein.

Ähnliche Druckbehälter sind beispielsweise aus der EP 2000 734 A2, aus der US 6,230,922 B1, aus der DE 10 2006 057 422 B3 sowie aus der DE 196 31 546 C1 bekannt.

Der Erfindung liegt daher die Aufgabe zugrunde, einen Druckbehälter der eingangs genannten Art bereitzustellen, bei dem mit verhältnismäßig einfachen konstruktiven Maßnahmen eine wirkungsvolle Abdichtung erzielt wird.

Die Aufgabe wird gelöst durch einen Druckbehälter zur Speicherung von flüssigen oder gasförmigen Medien, umfassend einen Kunststoffnnenbehälter mit wenigstens einem nicht einstückig mit diesem verbundenen Halsstück, welches an dem Behälterhals im Bereich einer Behälteröffnung angeordnet ist, sowie mit einer den Kunststoffinnenbehälter und das Halsstück zumindest teilweise umschließenden Stützhülle, wobei das Halsstück mit Mitteln zur Aufnahme einer Anschlussarmatur versehen ist, wobei der Druckbehälter gemäß der Erfindung gekennzeichnet ist durch wenigstens einen Einsatz, welcher wenigstens einen Teil des Behälterhalses bildet und welcher einen Dichtsitz für die in das Halsstück einzusetzende Armatur bildet.

Hierdurch ist es möglich, eine Armatur direkt gegen den Einsatz abzudichten, sodass aufwendige Maßnahmen zur Abdichtung des Kunststoffnnenbehälters gegen das Halsstück bzw. des Halsstücks gegen den Kunststoffnnenbehälter nicht erforderlich sind.

Der Einsatz umfasst einen hülsenförmigen, zylindrischen Teil, der mit der Wandung des Kunststoffinnenbehälters einen in das Innere desselben eingezogenen Behälterhals bildet.

Der Einsatz kann beispielsweise einen hülsenförmigen zylindrischen Teil umfassen, der in die Behälteröffnung eintaucht und diese vorzugsweise durchsetzt.

Bei einer besonders bevorzugten Variante des Druckbehälters gemäß der Erfindung ist vorgesehen, dass der hülsenförmige zylindrische Teil des Einsatzes soweit in das Füllvolumen des Kunststoffinnenbehälters eintaucht, dass der Behälterinnendruck von außen auf den Einsatz so einwirkt, dass eine Abdichtung der Armatur innerhalb des Einsatzes bedingt durch den Behälterinnendruck verstärkt wird.

Alternativ kann vorgesehen sein, dass der Einsatz einen hülsenförmigen zylindrischen Teil umfasst, der coaxial zu der Behälteröffnung und fluchtend mit dieser angeordnet ist.

Bei einer Variante des Druckbehälters gemäß der Erfindung ist vorgesehen, dass der Einsatz einen Kragen aufweist, der mit der Wandung des Kunststoffinnenbehälters verschweißt und/oder verklebt ist. Bei der bevorzugten Variante des Druckbehälters ist der Einsatz auf die Außenseite des Kunststoffinnenbehälters aufgesetzt. Alternativ kann der Einsatz von innen an den Kunststoffinnenbehälter angebracht worden sein. Es können aber auch beide Varianten vorgesehen sein. Der Einsatz kann beispielsweise beim Extrusionsblasformen des Kunststoffinnenbehälters eingebracht worden sein. Auch ein nachträgliches Einfügen ist bei entsprechender Dimensionierung der Behälteröffnung möglich.

Besonders vorteilhaft ist es, wenn die Wandung des Kunststoffinnenbehälters im Bereich der Behälteröffnung konisch eingezogen ist und der Kragen des Einsatzes komplementär hierzu ausgebildet ist.

Um eine Zentrierung des Halsstücks bezüglich des Kunststoffinnenbehälters vor Aufbringen der Stützhülle zu erleichtern, kann vorgesehen sein, dass der Einsatz mit dem Halsstück formschlüssig verbunden ist. Dies trägt auch zur Stabilisierung des Verbundes aus Halsstück, Kunststoffinnenbehälter und Stützhülle bei etwaiger Querbeanspruchung der Armatur bei.

Bevorzugt besteht der Einsatz aus spritzgegossenem Kunststoff, der mit verhältnismäßig geringen Fertigungstoleranzen herstellbar ist und somit eine besonders gute Abdichtung und/oder Passung gewährleistet. Der Einsatz kann alternativ durch Rohrextrusion mit anschließendem Aufweiten hergestellt worden sein. Der Einsatz kann ebenso als extrusionsblasgeformtes Bauteil ausgebildet sein, welches eine Oberflächenbearbeitung erfahren hat. Schließlich kann der Einsatz als beliebiges Kunststoffteil ausgebildet sein, welches spannabhebend bearbeitet wurde.

Zweckmäßigerweise wurde der Kunststoffinnenbehälter durch Extrusionsblasformen erhalten. Bekanntlich können beim Extrusionsblasformen herstellungsbedingt Wandstärkenvariationen auftreten. Die Kombination eines spritzgegossenen Einsatzes mit einem extrusionsblasgeformten Kunststoffinnenbehälter ist insoweit besonders günstig, als dass durch den spritzgegossenen Einsatz Passungs- und Dichtungsflächen bereitgestellt werden, die die benötigte Maßhaltigkeit erfüllen.

Besonders zweckmäßig ist, wenn der Einsatz aus einem im Sinne einer Verschweißbarkeit zu dem Kunststoffinnenbehälter kompatiblen Material besteht. Durch das Verschweißen des Einsatzes bzw. des Kragens des Einsatzes mit der Wandung des Kunststoffinnenbehälters wird in diesem Bereich eine hinreichende Dichtigkeit erzielt.

Das Halsstück besteht bevorzugt aus Metall, dieses kann allerdings ebenso aus einem verhältnismäßig schlagzähen und formbeständigen Kunststoff bestehen, der für die Aufnahme eines Anschlussgewindes einer Anschlussarmatur geeignet ist.

Für den Liner bzw. für den Kunststoffinnenbehälter kommen alle handelsüblichen schweißbaren Thermoplasten wie HDPE, PP, PUR, POM, TPE, Polyester etc. in Betracht.

Der Kunststoffinnenbehälter kann beispielsweise einen mehrschichtigen Aufbau mit Barriereschichten zur Verringerung der Permeabilität für Kohlenwasserstoffe und/oder Sauerstoff und/oder Wasserstoff aufweisen.

Die Anschlussarmatur, beispielsweise in Form eines Anschlussventils, kann beispielsweise mit einem zylindrischen Anschlussstutzen über eine oder mehrere O-Ring-Dichtungen in dem Einsatz bzw. in dem hülsenförmigen zylindrischen Teil des Einsatzes abgedichtet sein.

Die Erfindung wird nachstehend anhand eines in den Zeichnungen dargestellten Ausführungsbeispiels erläutert.

Es zeigen:
- Figur 1: eine Teilansicht eines Druckbehälters gemäß der Erfindung,
- Figur 2: einen Längsschnitt durch den Druckbehälter gemäß Figur 1 ohne die diesen umschließende Stützhülle, als Explosionsansicht,
- Figur 3: eine vergrößerte Schnittansicht des Druckbehälters gemäß der Erfindung im Anschlussbereich einer Armatur nach einem ersten Ausführungsbeispiel,
- Figur 4: ein zweites Ausführungsbeispiel des Druckbehälters gemäß der Erfindung, wobei die Schnittansicht derjenigen in Figur 3 entspricht,
- Figur 5: ein drittes Ausführungsbeispiel des Druckbehälters gemäß der Erfindung, wobei die Schnittansicht denjenigen in den Figuren 3 und 4 entspricht,
- Figur 6: ein viertes Ausführungsbeispiel des Druckbehälters gemäß der Erfindung und
- Figur 7: ein fünftes Ausführungsbeispiel des Druckbehälters gemäß der Erfindung,
- Figur 8: ein sechstes Ausführungsbeispiel des Druckbehälters gemäß der Erfindung.

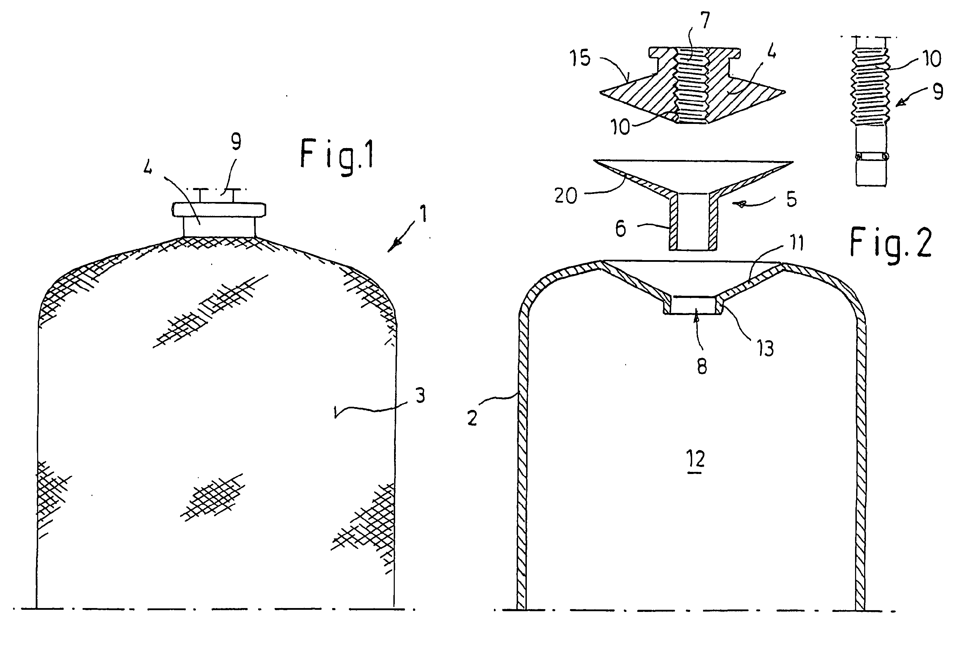

Der in Figur 1 dargestellte Druckbehälter 1 umfasst einen vorzugsweise durch Extrusionsblasformen erhaltenen Kunststoffinnenbehälter 2, der von einer Stützhülle 3 aus einer Faserverstärkung umgeben ist, wobei die Faserverstärkung in einer Matrix aus Kunstharzen eingebettet ist.

Obwohl der Kunststoffinnenbehälter 2 gemäß dem bevorzugten Ausführungsbeispiel durch Extrusionsblasformen erhalten wurde, kann dieser ebenso durch ein Thermoformverfahren oder durch ein Rotations-SinterVerfahren (Slush-Molding) erhalten worden sein. Als Materialien für den Kunststoffinnenbehälter 2 kommen Polyethylen, Polypropylen, Polyester, Polyurethan, POM, TPE oder dergleichen in Betracht.

Die Stützhülle kann aus Kohlefasern, Aramidfäden, Glasfäden oder dergleichen bestehen. Die Herstellung der Stützhülle erfolgt vorzugsweise durch Umwickeln des Kunststoffinnenbehälters 2 mit harzgetränkten Fasern/Fäden. Dieser Vorgang ist an und für sich bekannt.

Aus Gründen der einfacheren Darstellung ist die Stützhülle 3 nur in einigen der Figuren eingezeichnet.

Wie dies insbesondere der Figur 2 zu entnehmen ist, umfasst der Druckbehälter 1 gemäß der Erfindung den zuvor erwähnten Kunststoffinnenbehälter 2, ein Halsstück 4, das vorzugsweise aus Metall ausgebildet ist, und einen zwischen dem Halsstück 4 und dem Kunststoffinnenbehälter 2 angeordneten Einsatz 5. Der Einsatz 5 umfasst einen hülsenförmigen zylindrischen Teil 6, der mit einer Gewindebohrung 7 in dem Halsstück 4 und einer Behälteröffnung 8 in dem Kunststoffinnenbehälter 2 coaxial angeordnet ist.

Das Halsstück 4, der Einsatz 5 und die Behälteröffnung 8 definieren einen Behälterhals, der der Aufnahme einer Anschlussarmatur 9 dient. Der Einfachheit halber ist nur ein Teil der Anschlussarmatur 9 dargestellt, nämlich derjenige Teil, der von der Gewindebohrung 7 des Halsstücks 4 und dem zylindrischen Teil 6 des Einsatzes 5 aufgenommen wird. Hierzu sind in dem Halsstück 4 einerseits und an der Anschlussarmatur 9 andererseits jeweils zueinander komplementäre Befestigungsgewinde 10 vorgesehen.

Anders als bei sogenannten Kompositbehältern oder Druckbehältern nach dem Stand der Technik ist die Wandung 11 des Kunststoffinnenbehälters 2 im Bereich der Behälteröffnung 8 konisch eingezogen und bildet einen in das Behälterinnere 12 eingestülpten Stutzen 13.

Der Einsatz 5, der vorzugsweise ebenfalls aus einem thermoplastischen Kunststoff besteht, ist ebenfalls konisch ausgebildet und mit einem entsprechend der Kontur der Wandung 11 des Kunststoffinnenbehälters 2 im Bereich der Behälteröffnung 8 ausgebildeten Kragen 20 versehen.

Bei den in den Figuren 2 bis 6 dargestellten Ausführungsbeispielen des Druckbehälters gemäß der Erfindung ist vorgesehen, dass der zylindrische Teil 6 des Einsatzes 5 im montierten Zustand die Behälteröffnung 8 durchsetzt und in das Behälterinnere 12 hineinragt.

Der Einsatz 5 und die Wandung 11 des Kunststoffinnenbehälters 2 sind vorzugsweise im Bereich des Kragens 20 miteinander verschweißt, sodass die Trennfläche zwischen dem Einsatz 5 und der Wandung 11 des Kunststoffinnenbehälters 2 entsprechend gasdicht ist. Hierzu ist vorgesehen, dass der Einsatz 5 aus einem im Sinne einer Verschweißbarkeit zu dem Kunststoffinnenbehälter 2 kompatiblen Material besteht. Besteht der Einsatz 5 aus einem Kunststoff, der nicht mit der Wandung 11 des Kunststoffinnenbehälters 2 verschweißbar ist, so kann dieser beispielsweise mit der Wandung 11 verklebt sein.

Das Halsstück 4, der Einsatz 5 und die Behälteröffnung 8 sind so zueinander zentriert, dass in die hierdurch gebildete Öffnung eine Anschlussarmatur 9 bzw. ein Rohrstück einer Anschlussarmatur 9 dichtend eingesetzt werden kann. Dabei bildet der hülsenförmige zylindrische Teil 6 des Einsatzes 5 im Inneren der von diesem begrenzten Öffnung einen Dichtsitz für ein Dichtmittel 14 der Anschlussarmatur 9. Im vorliegenden Fall ist eine O-Ring-Dichtung vorgesehen, die in bekannter Art und Weise in einer Nut des Rohrfortsatzes der Anschlussarmatur 9 angeordnet ist. Zur Verbesserung der Dichtwirkung kann vorgesehen sein, dass der Rohrfortsatz der Anschlussarmatur 9 mehrere mit Abstand zueinander angeordnete Nuten mit jeweils darin angeordneten O-Ring-Dichtungen aufweist.

Bei dem Ausführungsbeispiel des Druckbehälters 1 gemäß Figuren 2 bis 6 ist vorgesehen, dass der zylindrische Teil 6 des Einsatzes 5 so in das Behälterinnere 12 hineinragt und so bemessen ist, dass die Abdichtung mit der Anschlussarmatur 9 in dem in das Behälterinnere 12 eintauchenden Bereich des zylindrischen Teils 6 stattfindet. Dadurch wird in vorteilhafter Art und Weise eine sich selbst verstärkende Abdichtung bei Innendruckbeaufschlagung des Druckbehälters 1 erzielt. Der in dem Druckbehälter 1 vorherrschende Druck wirkt radial auf den zylindrischen Teil 6 des Einsatzes 5 und trägt damit in besonders günstiger Art und Weise zur Abdichtung des Druckbehälters 1 bei.

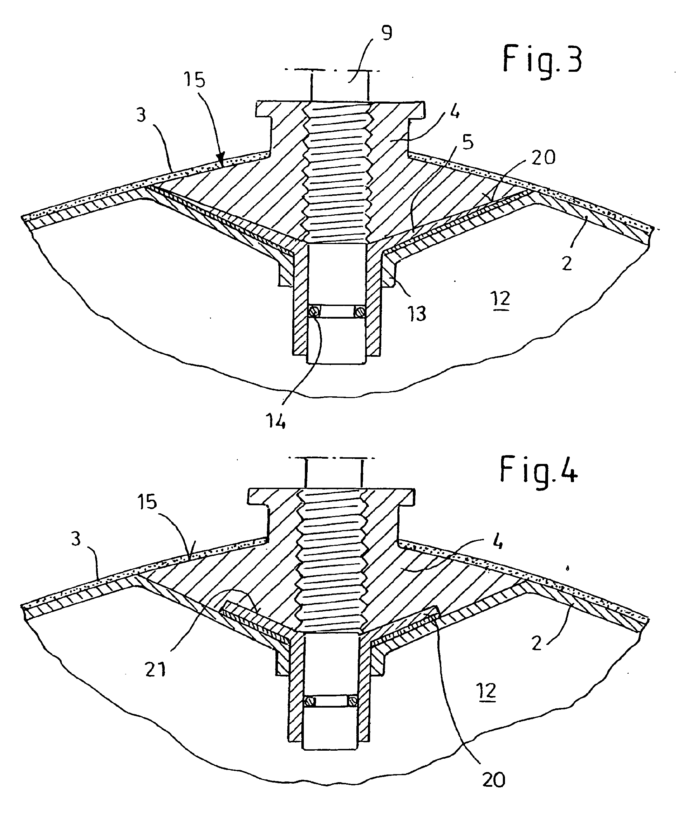

Zur Montage des Druckbehälters 1 wird der Einsatz 5 in den konischen eingezogenen Bereich der Wandung 11 des Kunststoffinnenbehälters eingeklebt und/oder eingeschweißt. Sodann wird das Halsstück 4 aufgesetzt und zentriert. Bei den in den Figuren 3 und 4 dargestellten Schnittansichten ist jeweils zwischen dem Einsatz 5 und dem konisch eingezogenen Bereich der Wandung 11 des Kunststoffinnenbehälters eine Klebstoffschicht/Haftvermittlerschicht, die nicht näher bezeichnet ist, andeutungsweise dargestellt.

Eine Fixierung des Halsstücks 4 erfolgt durch die Faserwicklung der Stützhülle 3, die in einem spitzen Winkel bezüglich der Längsachse des Druckbehälters 1 so erfolgt, dass der Schulterbereich 15 des Halsstücks 4 von der Stützhülle 3 eingefasst wird.

Um das Halsstück 4 bei der Montage zumindest teilweise zu zentrieren, kann dieses temporär mit einer Art Kaliber in den Einsatz 5 und dem Halsstück 4 fixiert werden.

Bei der in Figur 4 gezeigten Variante des Druckbehälters ist der Kragen 20 des Einsatzes 5 zwecks Zentrierung bezüglich des Halsstücks 4 in eine Ausnehmung 21 des Halsstücks eingefügt.

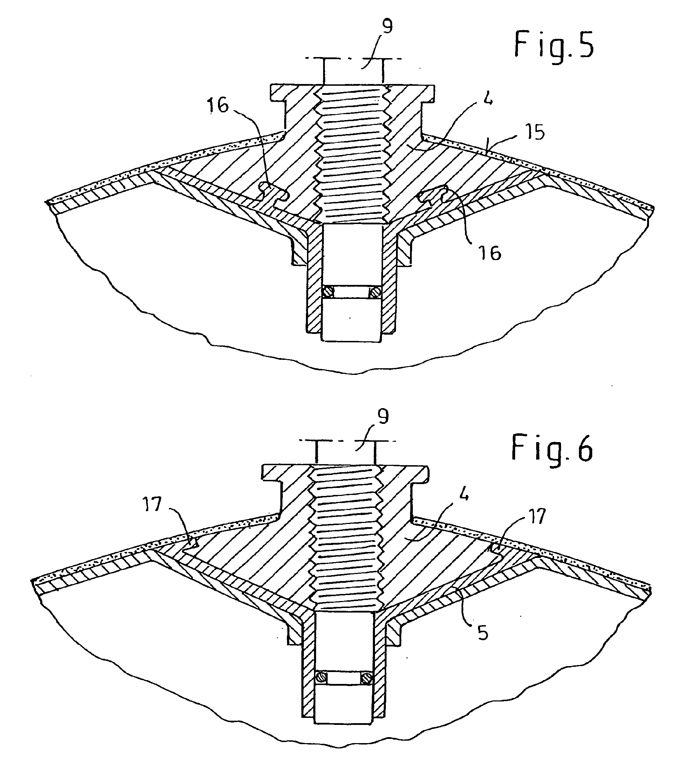

Nach einer alternativen Ausgestaltung des Druckbehälters 1 gemäß Figur 5 ist vorgesehen, dass das Halsstück 4 über Schwalbenschwanzverbinder 16 formschlüssig mit dem Einsatz 5 verbunden ist. Hierzu können in der dem Schulterbereich 15 abgekehrten Fläche des Halsstücks 4 kreissegmentförmige Nuten mit Schwalbenschwanzprofil vorgesehen sein, in die entsprechende Profilabschnitte des Einsatzes 5 eingreifen.

Der Einsatz 5 kann entweder an das Halsstück 4 angeformt worden sein oder die Schwalbenschwanzverbinder 16 sind nach Art eines Bajonettverschlusses angeordnet, sodass das Halsstück 4 mit dem Einsatz 5 durch eine Drehbewegung in Eingriff bringbar ist.

Eine andere Variante des Druckbehälters 1 ist in Figur 6 dargestellt. Nach dieser Variante ist der Einsatz 5 an seinem von dem zylindrischen Teil abgekehrten Rand mit einem umlaufenden Kragen 17 versehen, der den Schulterbereich 15 des Halsstücks 4 umgreift.

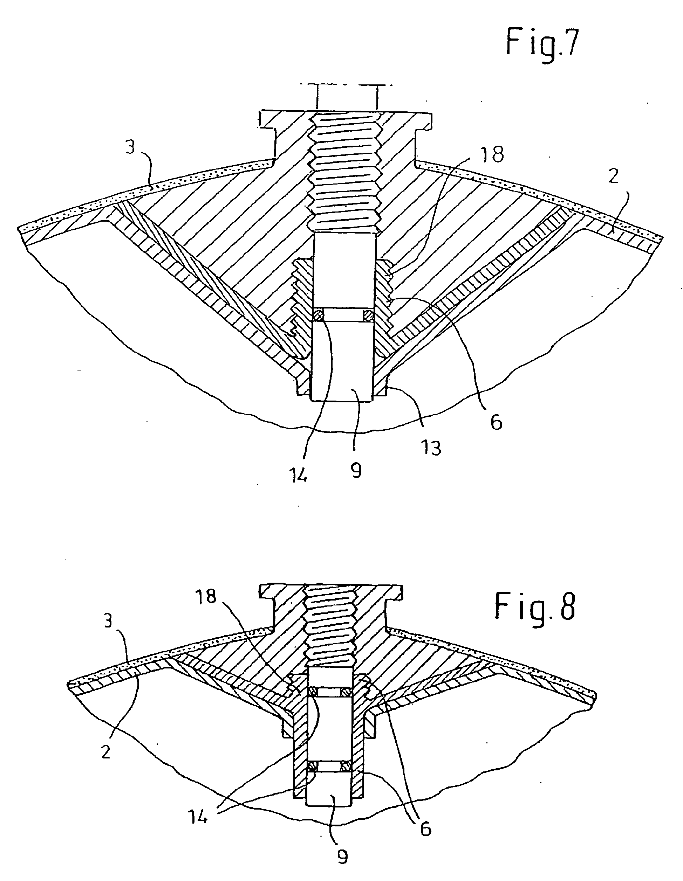

Eine weitere Variante des Druckbehälters gemäß der Erfindung ist in Figur 7 dargestellt. Der zylindrische Teil 6 des Einsatzes 5 ist in Bezug auf die dem Halsstück 4 zugewandten Fläche des Einsatzes 5 eingezogen bzw. eingestülpt und mit einem Gewinde 18 versehen, welches mit einem Innengewinde 19 des Halsstücks 4 zusammenwirkt. Bei dieser Anordnung durchsetzt der zylindrische Teil 6 des Einsatzes 5 nicht die Behälteröffnung 8, vielmehr ist diese coaxial und fluchtend zu der Behälteröffnung 8 ausgerichtet.

Bei der in Figur 8 dargestellten Variante des Druckbehälters 1 gemäß der Erfindung ist der zylindrische Teil 6 des Einsatzes durchgängig derart ausgebildet, dass er sowohl das Halsstück 4 als auch die Behälteröffnung 8 vollständig durchsetzt und in das Füllvolumen des Druckbehälters 1 hineinragt. In dem das Halsstück 4 durchsetzenden Bereich des Einsatzes 5 ist dieser an seinem Außenumfang mit einem Gewinde 18 versehen. Die Anschlussarmatur 9 ist innerhalb des Einsatzes 5 über zwei in axialer Richtung voneinander beanstandete Dichtmittel 14 gegen die Innenwandung des Einsatzes 5 abgedichtet. Es können beispielsweise zwei mit Abstand zueinander angeordnete O-Ring-Dichtungen sein.

**Bezugszeichenliste**

| | |
|---|---|
| 1 | Druckbehälter |
| 2 | Kunststoffinnenbehälter |
| 3 | Stützhülle |
| 4 | Halsstück |
| 5 | Einsatz |
| 6 | zylindrischer Teil |
| 7 | Gewindebohrung |
| 8 | Behälteröffnung |
| 9 | Anschlussarmatur |
| 10 | Befestigungsgewinde |
| 11 | Wandung |
| 12 | Behälterinneres |
| 13 | Stutzen |
| 14 | Dichtmittel |
| 15 | Schulterbereich des Halsstücks |
| 16 | Schwalbenschwanzverbinder |
| 17 | Kragen |
| 18 | Gewinde |
| 19 | Innengewinde |
| 20 | Kragen |

## Patentansprüche

1. Druckbehälter (1) zur Speicherung von flüssigen oder gasförmigen Medien, umfassend einen Kunststoffinnenbehälter (2) mit wenigstens einem nicht einstückig mit diesem verbundenen Halsstück (4), welches an dem Behälterhals im Bereich einer Behälteröffnung (8) angeordnet ist, sowie mit einer den Kunststoffinnenbehälter (2) und das Halsstück (4) zumindest teilweise umschließenden Stützhülle (3), wobei das Halsstück (4) mit Mitteln zur Aufnahme einer Anschlussarmatur (9) versehen ist, und wenigstens ein Einsatz (5) vorgesehen ist, welcher wenigstens einen Teil des Behälterhalses und welcher einen Dichtsitz für die in das Halsstück (4) einzusetzende Armatur (9) bildet, wobei der Einsatz (5) einen hülsenförmigen , zylindrischen Teil (6) umfasst, **dadurch gekennzeichnet, dass** der hülsenförmige, zylindrische Teil (6) des Einsatzes (5) mit der Wandung des Kunstoffinnenbehälters (2) einen in das Innere des Kunststoffbehälters eingezogene Behälterhals bildet, wobei die Wandung (11) des Kunststoffinnenbehälters (2) im Bereich der Behälteröffnung (8) konisch eingezogen ist und einen in das Behälterinnere (12) eingestülpten Stutzen bildet.

2. Druckbehälter nach Anspruch 1, **dadurch gekennzeichnet, dass** der Einsatz (5) einen hülsenförmigen, zylindrischen Teil (6) umfasst, der in die Behälteröffnung (8) eintaucht und diese vorzugsweise durchsetzt.

3. Druckbehälter nach Anspruch 2, **dadurch gekennzeichnet, dass** der hülsenförmige, zylindrische Teil (6) des Einsatzes (5) in das Füllvolumen des Kunststoffinnenbehälters (2) eintaucht.

4. Druckbehälter nach Anspruch 1, **dadurch gekennzeichnet, dass** der Einsatz (5) einen hülsenförmigen, zylindrischen Teil (6) umfasst, der coaxial zu der Behälteröffnung (8) und fluchtend mit dieser angeordnet ist.

5. Druckbehälter nach einem der Ansprüche 1 bis 4, **dadurch gekennzeichnet, dass** der Einsatz (5) einen Kragen (20) aufweist, der mit der Wandung (11) des Kunststoffinnenbehälters (2) verschweißt und/oder verklebt ist.

6. Druckbehälter nach einem der Ansprüche 1 bis 5, **dadurch gekennzeichnet, dass** die Wandung (11) des Kunststoffinnenbehälters (2) im Bereich der Behälteröffnung (8) konisch eingezogen ist und dass der Kragen (20) des Einsatzes (5) komplementär hierzu ausgebildet ist.

7. Druckbehälter nach einem der Ansprüche 1 bis 6, **dadurch gekennzeichnet, dass** das Halsstück mit dem Einsatz (5) formschlüssig verbunden ist.

8. Druckbehälter nach einem der Ansprüche 1 bis7, **dadurch gekennzeichnet, dass** der Einsatz (5) aus spritzgegossenem Kunststoff ausgebildet ist.

9. Druckbehälter nach einem der Ansprüche 1 bis8, **dadurch gekennzeichnet, dass** der Kunststoffinnenbehälter (2) durch Extrusionsblasformen erhalten wurde.

10. Druckbehälter nach einem der Ansprüche 1 bis9, **dadurch gekennzeichnet, dass** der Einsatz (5) aus einem im Sinne einer Verschweißbarkeit zu dem Kunststoffinnenbehälter (2) kompatiblen Material besteht.

11. Druckbehälter nach einem der Ansprüche 1 bis 10, **dadurch gekennzeichnet, dass** das Halsstück (4) aus Metall besteht.

12. Druckbehälter nach einem der Ansprüche 1 bis11, **dadurch gekennzeichnet, dass** der Kunststoffinnenbehälter (2) mehrschichtig ausgebildet ist, wobei dieser vorzugsweise wenigstens eine Barriereschicht aus einem für Sauerstoff und/oder Wasserstoff und/oder Kohlenstoffe schwer oder nicht permeablen Material umfasst.

## Claims

1. Pressure container (1) for storing liquid or gaseous media, said container comprising a plastic inner container (2) having at least one neck piece (4) which is not connected in one piece to said inner container but which is arranged on the container neck in the region of an opening (8) in the container, and also having a supporting envelope (3) which at least partially encloses the plastic inner container (2) and the neck piece (4), wherein said neck piece (4) is provided with means for receiving a connecting fitting (9), and at least one insert (5) is provided which forms at least part of the container neck and which forms a sealing seat for the fitting (9) which is to be inserted in the neck piece (4), wherein the insert (5) comprises a sleeve-shaped, cylindrical part (6), **characterised in that** the sleeve-shaped, cylindrical part (6) of the insert (5) forms, with the wall of the plastic inner container (2), a container neck which is drawn inwards into the interior of the plastic container, wherein the wall (11) of the plastic inner container (2) is drawn inwards conically in the region of the container opening (8) and forms a sleeve which is introverted into the interior (12) of the container.

2. Pressure container according to Claim 1, **characterised in that** the insert (5) comprises a sleeve-shaped, cylindrical part (6) which penetrates into the container opening (8) and preferably passes through the latter.

3. Pressure container according to Claim 2, **characterised in that** the sleeve-shaped, cylindrical part (6) of the insert (5) penetrates into the filling volume of the plastic inner container (2).

4. Pressure container according to Claim 1, **characterised in that** the insert (5) comprises a sleeve-shaped, cylindrical part (6) which is arranged coaxially with the container opening (8) and in alignment with the latter.

5. Pressure container according to one of Claims 1 to 4, **characterised in that** the insert (5) has a collar (20) which is welded and/or bonded to the wall (11) of the plastic inner container (2).

6. Pressure container according to one of Claims 1 to 5, **characterised in that** the wall (11) of the plastic inner container (2) is drawn inwards conically in the region of the container opening (8), and that the collar (20) of the insert (5) is constructed in a manner complementary thereto.

7. Pressure container according to one of Claims 1 to 6, **characterised in that** the neck piece is connected to the insert (5) in a form-locking manner.

8. Pressure container according to one of Claims 1 to 7, **characterised in that** the insert (5) is constructed from injection-moulded plastic.

9. Pressure container according to one of Claims 1 to 8, **characterised in that** the plastic inner container (2) has been obtained by extrusion blow moulding.

10. Pressure container according to one of Claims 1 to 9, **characterised in that** the insert (5) consists of a material which is compatible from the point of view of being weldable to the plastic inner container (2).

11. Pressure container according to one of Claims 1 to 10, **characterised in that** the neck piece (4) consists of metal.

12. Pressure container according to one of Claims 1 to 11, **characterised in that** the plastic inner container (2) is of multilayer construction, said inner container preferably comprising at least one barrier layer made of a material which is difficultly permeable or is non-permeable in respect of oxygen and/or hydrogen and/or hydrocarbons.

## Revendications

1. Contenant sous pression (1) pour le stockage de milieux liquides ou gazeux, comprenant un contenant intérieur en plastique (2) qui comprend au moins une pièce de col (4) non reliée d'un seul tenant avec celui-ci, qui est agencée sur le col du contenant dans la zone d'une ouverture du contenant (8), et qui comprend une enveloppe support (3) entourant au moins en partie le contenant intérieur en plastique (2) et la pièce de col (4), la pièce de col (4) étant munie de moyens destinés à accueillir un élément de raccordement (9), et au moins un insert (5) étant prévu, qui forme au moins une partie du col du contenant et qui forme un siège d'étanchéité pour l'élément (9) à placer dans la pièce de col (4), l'insert (5) comprenant une partie cylindrique en forme de manchon (6), **caractérisé en ce que** la partie cylindrique en forme de manchon (6) de l'insert (5) forme avec la paroi du contenant intérieur en plastique (2) un col de contenant inséré à l'intérieur du contenant en plastique, la paroi (11) du contenant intérieur en plastique (2) rétrécissant coniquement dans la zone de l'ouverture du contenant (8) et formant un raccord pénétrant à l'intérieur du contenant (12).

2. Contenant sous pression selon la revendication 1, **caractérisé en ce que** l'insert (5) comprend une partie cylindrique en forme de manchon (6) qui plonge dans l'ouverture du contenant (8) et traverse de préférence celle-ci.

3. Contenant sous pression selon la revendication 2, **caractérisé en ce que** la partie cylindrique en forme de manchon (6) de l'insert (5) plonge dans le volume de remplissage du contenant intérieur en plastique (2).

4. Contenant sous pression selon la revendication 1, **caractérisé en ce que** l'insert (5) comprend une partie cylindrique en forme de manchon (6), qui est agencée coaxialement avec l'ouverture du contenant (8) et alignée avec celle-ci.

5. Contenant sous pression selon l'une quelconque des revendications 1 à 4, **caractérisé en ce que** l'insert (5) comprend une bride (20) qui est soudée et/ou collée avec la paroi (11) du contenant intérieur en plastique (2).

6. Contenant sous pression selon l'une quelconque des revendications 1 à 5, **caractérisé en ce que** la paroi (11) du contenant intérieur en plastique (2) rétrécit coniquement dans la zone de l'ouverture du contenant (8) et **en ce que** la bride (20) de l'insert (5) est configurée sous forme complémentaire de celle-ci.

7. Contenant sous pression selon l'une quelconque des revendications 1 à 6, **caractérisé en ce que** la pièce de col est reliée par complémentarité de forme avec l'insert (5).

8. Contenant sous pression selon l'une quelconque des revendications 1 à 7, **caractérisé en ce que** l'insert (5) est configuré en un plastique moulé par injection.

9. Contenant sous pression selon l'une quelconque des revendications 1 à 8, **caractérisé en ce que** le contenant intérieur en plastique (2) a été obtenu par moulage par extrusion-soufflage.

10. Contenant sous pression selon l'une quelconque des revendications 1 à 9, **caractérisé en ce que** l'insert (5) est constitué d'un matériau compatible au sens d'une soudabilité avec le contenant intérieur en plastique (2).

11. Contenant sous pression selon l'une quelconque des revendications 1 à 10, **caractérisé en ce que** la pièce de col (4) est constituée de métal.

12. Contenant sous pression selon l'une quelconque des revendications 1 à 11, **caractérisé en ce que** le contenant intérieur en plastique (2) est configuré en plusieurs couches, celles-ci comprenant de préférence au moins une couche de barrière en un matériau peu ou non perméable à l'oxygène et/ou à l'hydrogène et/ou au carbone.
